# FASCICULE DE BREVET EUROPEEN

(11) **EP 2 492 659 B1**
(45) Date de publication et mention de la délivrance du brevet: **25.12.2019**
(21) Numéro de dépôt: 12155812.6
(22) Date de dépôt: 16.02.2012
(51) Int. Cl.: G01M 11/02, G01M 11/04, G02B 23/02

(54) **Banc de contrôle simplifié de télescopes et télescopes auto-contrôlables**
Vereinfachter Prüfstand für Teleskope und autoprüfbares Teleskop
Simplified test bench for telescopes and autotesting telescope

(30) Priorité: 24.02.2011 FR 1100549
(43) Date de publication de la demande: 29.08.2012
(73) Titulaire: Thales, 92400 Courbevoie (FR)
(72) Inventeur: Perrin, Guillaume, 06400 LA COLLE SUR LOUP (FR); Liotard, Arnaud, 06130 GRASSE (FR); Benard, Hervé, 83440 MONTAUROUX (FR)
(74) Mandataire: Bréda, Jean-Marc

(56) Documents cités:
- EP-A1- 0 692 707
- CN-A- 101 000 232
- CN-A- 101 251 436
- FR-A1- 2 920 536
- JP-A- 2002 228 543
- JP-A- 2007 085 788
- HU NINGSHENG: "Testing large telescope mirrors in the optical shop by an autocollimation method with multiple pendulum flat mirrors", APPLIED OPTICS, vol. 19, no. 16, 15 août 1980 (1980-08-15) , page 2680, XP055009942, ISSN: 0003-6935, DOI: 10.1364/AO.19.002680

## Description

Le domaine de l'invention est celui du contrôle et de la mesure de la qualité optique d'instruments optiques comportant des éléments optiques de grande dimension, de type télescopes.

La mesure des performances optiques est le point clé de la campagne de tests d'un télescope après son assemblage. Il s'agit plus exactement de réaliser un ensemble de mesures avant et après un certain nombre d'essais en environnements vibratoire ou thermique afin de contrôler l'évolution de la performance optique de l'instrument lorsqu'il subit des contraintes diverses.

La qualité optique de l'instrument est caractérisée par une erreur de phase du front d'onde, encore appelée en terminologie anglo-saxonne « WFE », acronyme signifiant « Wave-Front Error ». Cette WFE prend en compte les aberrations des miroirs du télescope, mais également les différents défauts d'alignement des miroirs constituant le télescope ou du détecteur par rapport au télescope. Connaissant la WFE, on en déduit la Fonction de Transfert Optique du télescope encore notée FTO. Cette fonction est reliée à la précédente par une classique relation d'auto-corrélation. Connaissant la fonction de transfert optique FTO, on calcule alors la Fonction de Transfert de Modulation FTM de l'instrument par passage au module de la fonction de transfert optique. Les défauts d'alignement entre les différents composants de l'instrument n'étant pas prévisibles, la mesure de la FTM est indispensable pour caractériser l'instrument.

Actuellement, la mesure de la FTM d'un télescope nécessite l'utilisation de composants optiques de grande qualité optique, réglés très précisément, de diamètre au moins égal à celui du télescope et disposés dans un caisson à vide stabilisé thermiquement et mécaniquement pour filtrer les vibrations.

Cette mesure est donc extrêmement coûteuse, l'ensemble du matériel requis comprenant au moins un collimateur optique de grande dimension et un caisson à vide stabilisé vaut plusieurs millions d'euros. Ce coût devient prohibitif lorsqu'il s'agit de contrôler un grand télescope hors de son unité de fabrication en utilisation opérationnelle. En effet, il devient impossible d'envisager une mesure de FTM classique chez le client final, au cours de campagnes de tests avec un banc de contrôle dédié à cet unique télescope.

Il est donc important de trouver une solution technique autre que celle du banc optique de contrôle « classique » pour le suivi de performances optiques d'un instrument. Idéalement, cette solution doit nécessiter un recours limité à des moyens optiques autres que ceux du télescope, tout en garantissant une qualité de la mesure de performance.

Différentes solutions techniques sont possibles. Elles peuvent être regroupées en trois types principaux.

Les solutions techniques du premier type consistent à analyser l'image optique d'une source externe connue, image obtenue au foyer du télescope pour déterminer les performances optiques du télescope. Ce type de solution comporte différentes variantes. On peut utiliser un collimateur et une méthode de mesure de FTM classique. On peut également utiliser un analyseur de front d'onde. On peut également acquérir les images d'objets contrastés situés à l'infini comme certaines étoiles ou la lune.

Un second type de solution technique consiste à mettre en œuvre un analyseur de front d'onde sur l'instrument. On citera, par exemple, la méthode de Shack-Hartmann consistant à réaliser un échantillonnage de la pupille d'entrée pour mesurer localement la WFE.

Un troisième type de solutions consiste à mesurer les caractéristiques géométriques de l'instrument. On citera, par exemple, la mesure de la distance séparant les miroirs primaire et secondaire, les techniques de videogrammétrie, les techniques de mesure par laser ou « laser tracker » ou encore les senseurs d'interférométrie.

Toutes ces mesures présentent un certain nombre d'inconvénients, soit au niveau du coût des moyens de tests à mettre en œuvre, soit au niveau de la complexité de la méthode de mesure, de la performance atteinte, ou des contraintes sur le design de l'instrument.

Le brevet FR 2 722 571 décrit un procédé permettant de caractériser un instrument d'optique par autocollimation, l'instrument comportant un ensemble de détection situé dans le plan focal de l'optique et le banc de test un miroir plan de grande dimension disposé devant la pupille d'entrée de l'instrument. Ce système simple présente encore un inconvénient. Il est nécessaire de disposer d'un miroir plan de taille équivalente à celle de la pupille de l'instrument.

Les documents de références CN 101 251 436 et JP 2002 228543 divulguent également des dispositifs de test d'un objectif optique mettant en œuvre un seul miroir plan plus large ou de même taille que l'objectif optique du télescope.

Le brevet FR 2 920 536 décrit un banc de contrôle dans lequel un miroir de contrôle de dimensions inférieures à celle du miroir d'un télescope se déplace en translation pour assurer une cartographie complète du télescope.

La demande EP 0 692 707 décrit un procédé de caractérisation d'un instrument d'optique comportant un objet test et un miroir plan.

La publication de Hu Ningsheng intitulée « Testing large telescope mirrors in the optical shop by an autocollimation method with multiple pendulum flat mirrors", Applied Optics, Vol. 19, N° 16, 15 août 1980, page 2680 décrit, comme son titre l'indique, un banc de contrôle optique comportant une pluralité de miroirs pendulaires. Le document de référence JP 2007 085788 divulgue un procédé voisin.

Le document de référence CN 101 000 232 divulgue une méthode interférométrique de contrôle des télescopes utilisant un miroir plan.

Le dispositif selon l'invention ne présente pas ces inconvénients. Il met en œuvre un miroir d'autocollimation de dimensions inférieures à celles de la pupille. Il est clair que ce miroir ne permet qu'une caractérisation partielle de l'instrument. Elle est cependant suffisante dans un grand nombre d'applications où le but de la caractérisation n'est pas tant d'obtenir une performance absolue du télescope mais plutôt de mesurer son évolution soit dans le temps soit à la suite d'essais d'endurance ou d'environnement. Dans ce cas, l'évolution de la performance peut être détectée sur une caractérisation partielle.

Plus précisément, l'invention a pour premier objet un banc de contrôle optique pour instrument optique de type télescope, l'instrument (100) comportant un objectif optique (110), un boîtier de photo-détection (120) disposé au foyer dudit objectif optique et au moins une source de lumière (121) disposée au voisinage dudit boîtier de photo-détection, la pupille optique de l'objectif optique ayant un premier diamètre, le banc comprenant un unique miroir plan (130) ayant un second diamètre inférieur au premier diamètre et des moyens permettant de disposer ce miroir plan de façon que l'image de la source de lumière donnée par l'objectif optique et réfléchie par ledit miroir plan se focalise sur le boîtier de photo-détection, ladite image reçue étant une image partielle de l'objectif optique, le banc comportant des moyens d'analyse de ladite image reçue,
caractérisé en ce que les moyens d'analyse sont configurés pour effectuer une caractérisation partielle en déterminant la qualité optique d'une partie de l'objectif sur la base de ladite image reçue, les moyens d'analyse étant en outre configurés pour déterminer la dérive de la qualité optique du télescope sur la base de ladite caractérisation partielle.

Avantageusement, les moyens d'analyse comportent un analyseur de front d'onde des images reçues pour estimer la « WFE » de l'instrument.

Avantageusement, le rapport du second diamètre sur le premier diamètre est compris entre 30% et 80% et plus précisément, le rapport du second diamètre sur le premier diamètre vaut environ 60%.

Avantageusement, la source de lumière comporte au moins une source d'éclairage et une fibre optique dont une des extrémités est disposée au voisinage de la surface photosensible du boîtier de photo-détection. Dans une variante, la source de lumière comporte au moins deux fibres optiques d'éclairage, l'objectif optique travaillant à une longueur d'onde prédéterminée, la première fibre optique étant disposée dans un premier plan perpendiculaire à l'axe optique de l'objectif et la seconde fibre optique disposée dans un second plan parallèle au premier plan et décalé par rapport à ce premier plan.

L'invention a pour second objet un télescope optique (100) comportant un objectif optique (110), un boîtier de photo-détection (120) disposé au foyer dudit objectif optique et au moins une source de lumière (121) disposée au voisinage dudit boîtier de photo-détection, la pupille optique de l'objectif optique ayant un premier diamètre, le télescope comportant également un cache mobile (140) ayant deux positions, une première position ouverte ou d'utilisation permettant de découvrir toute la pupille de l'objectif et une seconde position fermée ou de tests permettant de protéger toute la pupille de l'objectif, le cache mobile (140) comprenant un unique miroir plan (130) ayant un second diamètre inférieur au premier diamètre et des moyens permettant de disposer ce miroir plan de façon que l'image de la source de lumière donnée par l'objectif optique et réfléchie par ledit miroir plan se focalise sur le boîtier de photo-détection, ladite image reçue étant une image partielle de l'objectif optique, le télescope comportant des moyens d'analyse de ladite image reçue,
caractérisé en ce que les moyens d'analyse sont configurés pour effectuer une caractérisation partielle en déterminant la qualité optique d'une partie de l'objectif sur la base de ladite image reçue, les moyens d'analyse étant en outre configurés pour déterminer la dérive de la qualité optique du télescope sur la base de ladite caractérisation partielle.

Avantageusement, le rapport du second diamètre sur le premier diamètre est compris entre 30% et 80%. Préférentiellement, le rapport du second diamètre sur le premier diamètre vaut environ 60%.

Avantageusement, la source de lumière comporte au moins une source d'éclairage et une fibre optique dont une des extrémités est disposée au voisinage de la surface photosensible du boîtier de photo-détection. Dans une variante de réalisation, la source de lumière comporte au moins deux fibres optiques d'éclairage, l'objectif optique travaillant à une longueur d'onde prédéterminée, la première fibre optique étant disposée dans un premier plan perpendiculaire à l'axe optique de l'objectif et la seconde fibre optique disposée dans un second plan parallèle au premier plan et décalé par rapport à ce premier plan.

Avantageusement, les moyens d'analyse comportent au moyen un analyseur de front d'onde des images reçues pour estimer la « WFE » de l'instrument.

L'invention sera mieux comprise et d'autres avantages apparaîtront à la lecture de la description qui va suivre donnée à titre non limitatif et grâce aux figures annexées parmi lesquelles :
La figure 1 représente un banc de contrôle optique selon l'invention ;
La figure 2 représente un boîtier de photo-détection selon l'invention ;
La figure 3 représente un télescope auto-contrôlable selon l'invention.

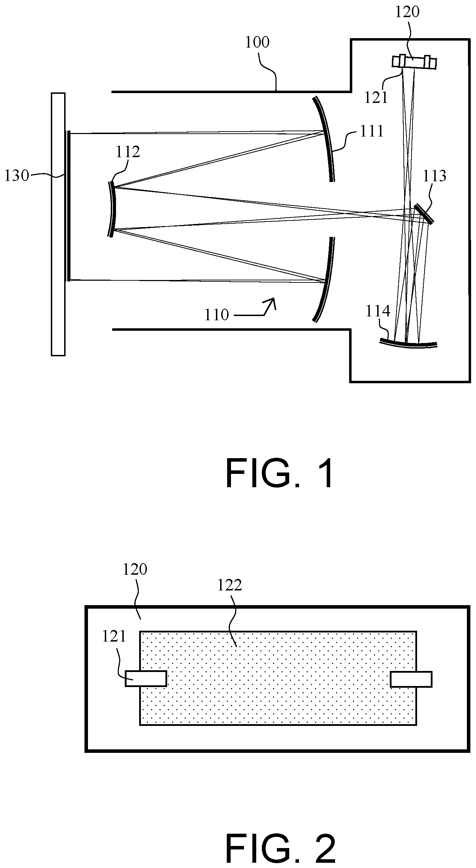

Sur la figure 1, on a représenté uniquement un télescope et le miroir d'auto-collimation nécessaire à son contrôle, ce qui fait l'essentiel de l'invention. Les moyens mécaniques permettant de maintenir alignés le télescope et ce miroir ne sont pas représentés. Ils ne représentent aucune difficulté technique de mise en œuvre particulière. Ne figurent pas non plus les moyens d'analyse électronique nécessaires à l'exploitation de l'image issue du boîtier de photo-détection du télescope.

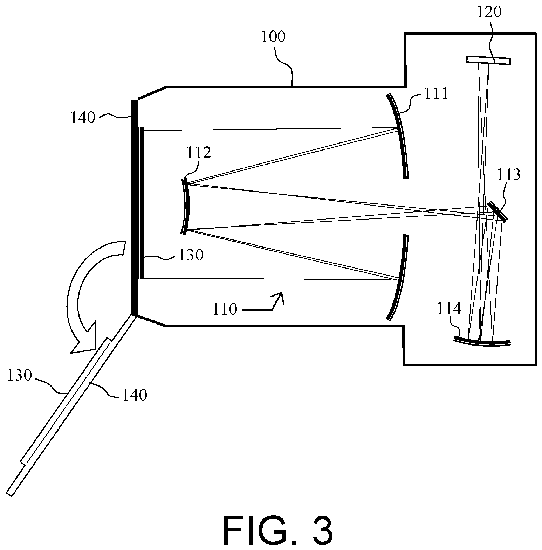

Comme on le voit sur la figure 1, le télescope 100 comporte un objectif optique 110 et un boîtier de photo-détection 120 disposé au foyer dudit objectif optique. Généralement, les télescopes de grande dimension comportent des objectifs catoptriques à miroirs. Ainsi, les objectifs des télescopes des figures 1 et 3 comportent un grand miroir primaire 111 d'un premier diamètre, un miroir secondaire 112, un miroir de repli 113 et un miroir tertiaire 114.

Le banc de test selon l'invention nécessite que le télescope comporte des aménagements spécifiques. Il est nécessaire que le bloc de photo-détection 120 comporte au moins une source de lumière 121 disposée au voisinage dudit boîtier de photo-détection. Les contraintes entraînées par cette mise en place de sources sont mineures dans la mesure où il n'est pas nécessaire de toucher à l'architecture optique ou à la structure mécanique du télescope.

Pour réaliser une mesure de la performance du télescope, on dispose un miroir plan 130 en auto-collimation sur l'axe optique du télescope. Ce miroir 130 a un second diamètre inférieur à celui du grand miroir 111. Si on éclaire la ou les sources de lumière 121 disposées au voisinage du bloc de photo-détection 120, leur image donnée par l'optique du télescope et par réflexion sur le miroir plan 130 se focalise sur la surface photo-sensible 122 dudit bloc. Le parcours des rayons lumineux à travers l'optique 110 du télescope est représenté par des traits fins sur les figures 1 et 3.

Cette image est ensuite traitée pour en déduire la qualité optique du télescope. On peut utiliser, par exemple, un analyseur de front d'onde pour estimer la « WFE » de l'instrument. Il est possible d'enregistrer plusieurs « WFE » successives, puis de post-traiter les « WFE » estimées, afin de calculer via un modèle numérique la performance optique de l'instrument qui peut être, par exemple, sa FTM.

La possibilité de contrôler la WFE de l'instrument à plusieurs temps de la phase de tests est tout à fait intéressante pour déterminer l'origine d'une baisse ou d'une perte de performance optique. Il est en effet aisé de remonter à des informations de déplacement des miroirs à partir de cette WFE plutôt qu'à partir de la FTM de l'instrument.

L'intérêt du procédé de contrôle est qu'il n'est pas nécessaire d'utiliser un miroir d'auto-collimation ayant un diamètre au moins égal à celui du miroir primaire de l'instrument dans la mesure où, dans un grand nombre d'applications, et en particulier pendant les essais d'endurance ou d'environnement, il est plus important de vérifier les dérives éventuelles de la qualité optique de l'instrument plus que sa performance absolue. En effet, le bon fonctionnement de la méthode repose sur l'hypothèse que seules des basses fréquences de la WFE de l'instrument risquent d'être affectées lors de la phase de test, les estimations dans la pupille réduite étant extrapolées à la pleine pupille pour extraire des informations de performance optique de l'instrument complet ou laissées telles quelles si l'on se contente d'informations locales. Cette hypothèse est tout à fait valide lorsqu'il s'agit de tests thermiques ou mécaniques puisqu'un mouvement des miroirs ou des structures les supportant implique justement des évolutions de la WFE en basses fréquences.

De façon plus précise, le rapport du second diamètre du miroir d'autocollimation sur le premier diamètre du télescope est compris entre 30% et 80%. Préférentiellement, le rapport du second diamètre sur le premier diamètre vaut environ 60%.

On peut utiliser des sources fibrées de façon à parfaitement maîtriser la géométrie de la source. Le bloc de photo-détection peut comporter plusieurs sources, par exemple deux fibres optiques au niveau de chaque point du champ pour lequel on souhaite une mesure de performance optique. Les sources peuvent être décalées le long de l'axe optique pour être défocalisées l'une par rapport à l'autre.

Comme on l'a vu, le banc selon l'invention permet, en particulier, de réaliser ces mesures de performance dans un environnement non maîtrisé, le télescope étant placé dans l'air et les micro-vibrations n'étant pas atténuées par des dispositifs anti-vibratoires. Bien entendu, il est possible de réaliser également des mesures classiques de performance optique dans un caisson à vide stabilisé. L'estimation des WFE par l'intermédiaire de l'analyseur de front d'onde est alors plus précise.

Le banc selon l'invention peut également être utilisé sur un satellite d'observation placé en orbite et comportant un télescope spatial 100, comme on le voit sur la figure 3. Le télescope est alors auto-contrôlable.

Il suffit de lui adjoindre un miroir plan 130 rétractable disposé sur le cache mobile 140 qui protège l'instrument lorsqu'il n'est pas opérationnel. On vient positionner ce cache devant le télescope 100 lors d'une phase de réglage, et on allume la ou les sources du plan focal comme explicité ci-dessus. Sur la figure 3, le cache 140 en position fermée ou de tests est représenté en traits noirs, il est représenté en silhouette blanche en position ouverte.

L'orientation du cache 140 doit être telle que le miroir associé 130 se trouve en position d'auto-collimation par rapport à l'optique 110 du télescope pendant cette phase de réglage.

Dans cette configuration, le miroir plan, les sources et les moyens d'analyse ont alors des caractéristiques voisines de celles utilisées sur un banc de test au sol. Ainsi, le rapport du second diamètre sur le premier diamètre est compris entre 30% et 80%. Préférentiellement, le rapport du second diamètre sur le premier diamètre vaut environ 60%.

## Revendications

1. Banc de contrôle optique pour instrument optique de type télescope, l'instrument (100) comportant un objectif optique (110), un boîtier de photo-détection (120) disposé au foyer dudit objectif optique et au moins une source de lumière (121) disposée au voisinage dudit boîtier de photo-détection, la pupille optique de l'objectif optique ayant un premier diamètre, le banc comprenant un unique miroir plan (130) ayant un second diamètre inférieur au premier diamètre et des moyens permettant de disposer ce miroir plan de façon que l'image de la source de lumière donnée par l'objectif optique et réfléchie par ledit miroir plan se focalise sur le boîtier de photo-détection, ladite image reçue étant une image partielle de l'objectif optique, le banc comportant des moyens d'analyse de ladite image reçue,
**caractérisé en ce que** les moyens d'analyse sont configurés pour effectuer une caractérisation partielle en déterminant la qualité optique d'une partie de l'objectif sur la base de ladite image reçue, les moyens d'analyse étant en outre configurés pour déterminer la dérive de la qualité optique du télescope sur la base de ladite caractérisation partielle.

2. Banc de contrôle optique selon la revendication 1, **caractérisé en ce que** les moyens d'analyse comportent un analyseur de front d'onde des images reçues pour estimer la « WFE » de l'instrument.

3. Banc de contrôle optique selon la revendication 1, **caractérisé en ce que** le rapport du second diamètre sur le premier diamètre est compris entre 30% et 80%.

4. Banc de contrôle optique selon la revendication 3, **caractérisé en ce que** le rapport du second diamètre sur le premier diamètre vaut environ 60%.

5. Banc de contrôle optique selon la revendication 1, **caractérisé en ce que** la source de lumière comporte au moins une source d'éclairage et une fibre optique dont une des extrémités est disposée au voisinage de la surface photosensible du boîtier de photo-détection.

6. Banc de contrôle optique selon la revendication 5, **caractérisé en ce que** la source de lumière comporte au moins deux fibres optiques d'éclairage, l'objectif optique travaillant à une longueur d'onde prédéterminée, la première fibre optique étant disposée dans un premier plan perpendiculaire à l'axe optique
de l'objectif et la seconde fibre optique disposée dans un second plan parallèle au premier plan et décalé par rapport à ce premier plan.

7. Télescope optique (100) comportant un objectif optique (110), un boîtier de photo-détection (120) disposé au foyer dudit objectif optique et au moins une source de lumière (121) disposée au voisinage dudit boîtier de photo-détection, la pupille optique de l'objectif optique ayant un premier diamètre, le télescope comportant également un cache mobile (140) ayant deux positions, une première position ouverte ou d'utilisation permettant de découvrir toute la pupille de l'objectif et une seconde position fermée ou de tests permettant de protéger toute la pupille de l'objectif, le cache mobile (140) comprenant un unique miroir plan (130) ayant un second diamètre inférieur au premier diamètre et des moyens permettant de disposer ce miroir plan de façon que l'image de la source de lumière donnée par l'objectif optique et réfléchie par ledit miroir plan se focalise sur le boîtier de photo-détection, ladite image reçue étant une image partielle de l'objectif optique, le télescope comportant des moyens d'analyse de ladite image reçue,
**caractérisé en ce que** les moyens d'analyse sont configurés pour effectuer une caractérisation partielle en déterminant la qualité optique d'une partie de l'objectif sur la base de ladite image reçue, les moyens d'analyse étant en outre configurés pour déterminer la dérive de la qualité optique du télescope sur la base de ladite caractérisation partielle.

8. Télescope optique selon la revendication 7, **caractérisé en ce que** le rapport du second diamètre sur le premier diamètre est compris entre 30% et 80%.

9. Télescope optique selon la revendication 8, **caractérisé en ce que** le rapport du second diamètre sur le premier diamètre vaut environ 60%.

10. Télescope optique selon la revendication 7, **caractérisé en ce que** la source de lumière comporte au moins une source d'éclairage et une fibre optique dont une des extrémités est disposée au voisinage de la surface photosensible du boîtier de photo-détection.

11. Télescope optique selon la revendication 10, **caractérisé en ce que** la source de lumière comporte au moins deux fibres optiques d'éclairage, l'objectif optique travaillant à une longueur d'onde prédéterminée, la première fibre optique étant disposée dans un premier plan perpendiculaire à l'axe optique de l'objectif et la seconde fibre optique disposée dans un second plan parallèle au premier plan et décalé par rapport à ce premier plan.

12. Télescope optique selon la revendication 7, **caractérisé en ce que** les moyens d'analyse comportent au moyen un analyseur de front d'onde des images reçues pour estimer la « WFE » de l'instrument.

## Patentansprüche

1. Optischer Prüfstand für ein optisches Instrument vom Typ Teleskop, wobei das Instrument (100) ein optisches Objektiv (110), ein Lichterkennungsgerät (120), welches im Fokus des optischen Objektivs angeordnet ist, und mindestens eine Lichtquelle (121), welche in der Nähe das Lichterkennungsgerätes angeordnet ist, beinhaltet, wobei die optische Pupille das optischen Objektivs einen ersten Durchmesser aufweist, wobei der Prüfstand einen einzigen ebenen Spiegel (130) beinhaltet, welcher einen zweiten Durchmesser aufweist, welcher kleiner als der erste Durchmesser ist und Mittel, die es ermöglichen, diesen ebenen Spiegel so anzuordnen, dass das Bild der Lichtquelle, welches vom optischen Objektiv gegeben wird und durch den ebenen Spiegel reflektiert wird, sich auf das Lichterkennungsgerät fokussiert, wobei das empfangene Bild ein Teilbild des optischen Objektivs ist, wobei der Prüfstand Mittel zur Analyse des empfangenen Bildes beinhaltet,
**dadurch gekennzeichnet, dass** die Analysemittel konfiguriert sind, um eine Teilcharakterisierung vorzunehmen, indem die optische Qualität eines Teils des Objektivs auf der Grundlage des empfangenen Bildes bestimmt wird, wobei die Analysemittel zudem konfiguriert sind, um den Drift der optischen Qualität des Teleskops auf der Grundlage der Teilcharakterisierung zu bestimmen.

2. Optischer Prüfstand nach Anspruch 1, **dadurch gekennzeichnet, dass** die Analysemittel einen Wellenfront-Analysator der empfangenen Bilder zum Schätzen der "WFE" des Instrumentes beinhalten.

3. Optischer Prüfstand nach Anspruch 1, **dadurch gekennzeichnet, dass** das Verhältnis zwischen dem zweiten Durchmesser und dem ersten Durchmesser zwischen 30 % und 80% beträgt.

4. Optischer Prüfstand nach Anspruch 3, **dadurch gekennzeichnet, dass** das Verhältnis zwischen dem zweiten Durchmesser und dem ersten Durchmesser ungefähr 60 % beträgt.

5. Optischer Prüfstand nach Anspruch 1, **dadurch gekennzeichnet, dass** die Lichtquelle mindestens eine Beleuchtungsquelle und einen Lichtwellenleiter beinhaltet, dessen eines Ende in der Nähe der lichtempfindlichen Oberfläche des Lichterkennungsgerätes angeordnet ist.

6. Optischer Prüfstand nach Anspruch 5, **dadurch gekennzeichnet, dass** die Lichtquelle mindestens zwei Beleuchtung-Lichtwellenleiter beinhaltet, wobei das optische Objektiv mit einer vorbestimmten Wellenlänge arbeitet, wobei der erste Lichtwellenleiter in einer ersten Ebene rechtwinklig zur optischen Achse des Objektivs angeordnet ist und der zweite Lichtwellenleiter in einer zweiten Ebene parallel zur ersten Ebene und in Bezug auf diese erste Ebene versetzt angeordnet ist.

7. Optisches Teleskop (100), beinhaltend ein optisches Objektiv (110), ein Lichterkennungsgerät (120), welches im Fokus des optischen Objektivs angeordnet ist, und mindestens eine Lichtquelle (121), welche in der Nähe des Lichterkennungsgerätes angeordnet ist, beinhaltet, wobei die optische Pupille des optischen Objektivs einen ersten Durchmesser aufweist, wobei das Teleskop ebenfalls eine bewegliche Abdeckung (140) mit zwei Positionen aufweist, eine erste, geöffnete oder Betriebsposition, welche es ermöglicht, die gesamte Pupille des Objektivs zu enthüllen und eine zweite, geschlossene oder Test-Position, welche es ermöglicht, die gesamte Pupille des Objektivs zu schützen, wobei die bewegliche Abdeckung (140) einen einzigen ebenen Spiegel (130) beinhaltet, welcher einen zweiten Durchmesser aufweist, welcher kleiner als der erste Durchmesser ist und Mittel, die es ermöglichen, diesen ebenen Spiegel so anzuordnen, dass das Bild der Lichtquelle, welches vom optischen Objektiv gegeben wird und durch den ebenen Spiegel reflektiert wird, sich auf das Lichterkennungsgerät fokussiert, wobei das empfangene Bild ein Teilbild des optischen Objektivs ist, wobei das Teleskop Mittel zur Analyse des empfangenen Bildes beinhaltet,
**dadurch gekennzeichnet, dass** die Analysemittel konfiguriert sind, um eine Teilcharakterisierung vorzunehmen, indem die optische Qualität eines Teils des Objektivs auf der Grundlage des empfangenen Bildes bestimmt wird, wobei die Analysemittel zudem konfiguriert sind, um den Drift der optischen Qualität des Teleskops auf der Grundlage der Teilcharakterisierung zu bestimmen.

8. Optisches Teleskop nach Anspruch 7, **dadurch gekennzeichnet, dass** das Verhältnis zwischen dem zweiten Durchmesser und dem ersten Durchmesser zwischen 30 % und 80% beträgt.

9. Optisches Teleskop nach Anspruch 8, **dadurch gekennzeichnet, dass** das Verhältnis zwischen dem zweiten Durchmesser und dem ersten Durchmesser ungefähr 60 % beträgt.

10. Optisches Teleskop nach Anspruch 7, **dadurch gekennzeichnet, dass** die Lichtquelle mindestens eine Beleuchtungsquelle und einen Lichtwellenleiter beinhaltet, dessen eines Ende in der Nähe der lichtempfindlichen Oberfläche des Lichterkennungsgerätes angeordnet ist.

11. Optisches Teleskop nach Anspruch 10, **dadurch gekennzeichnet, dass** die Lichtquelle mindestens zwei Beleuchtung-Lichtwellenleiter beinhaltet, wobei das optische Objektiv mit einer vorbestimmten Wellenlänge arbeitet, wobei der erste Lichtwellenleiter in einer ersten Ebene rechtwinklig zur optischen Achse des Objektivs angeordnet ist und der zweite Lichtwellenleiter in einer zweiten Ebene parallel zur ersten Ebene und in Bezug auf diese erste Ebene versetzt angeordnet ist.

12. Optisches Teleskop nach Anspruch 7, **dadurch gekennzeichnet, dass** die Analysemittel mindestens einen Wellenfront-Analysator der empfangenen Bilder zum Schätzen der "WFE" des Instrumentes beinhalten.

## Claims

1. An optical test bench for an optical instrument of the telescope type, the instrument (100) comprising an optical objective (110), a photo-detection unit (120) disposed at the focal point of said optical objective and at least one light source (121) disposed in the vicinity of said photo-detection unit, the optical pupil of the optical objective having a first diameter, the bench comprising a single flat mirror (130) having a second diameter that is less than the first diameter and means for disposing said flat mirror so that the image of the light source provided by the optical objective and reflected by said flat mirror focuses on the photo-detection unit, said received image being a partial image of the optical objective, the bench comprising means for analysing said received image,
**characterised in that** the analysis means are configured to carry out a partial characterisation by determining the optical quality of part of the objective on the basis of said received image, the analysis means also being configured to determine the drift of the optical quality of the telescope on the basis of said partial characterisation.

2. The optical test bench as claimed in claim 1, **characterised in that** the analysis means comprise a wavefront analyser of the received images for estimating the "WFE" of the instrument.

3. The optical test bench as claimed in claim 1, **characterised in that** the ratio of the second diameter to the first diameter is between 30% and 80%.

4. The optical test bench as claimed in claim 3, **characterised in that** the ratio of the second diameter to the first diameter is approximately 60%.

5. The optical test bench as claimed in claim 1, **characterised in that** the light source comprises at least one lighting source and one optical fibre, one of the ends of which is disposed in the vicinity of the photo-sensitive surface of the photo-detection unit.

6. The optical test bench as claimed in claim 5, **characterised in that** the light source comprises at least two lighting optical fibres, with the optical objective working at a predetermined wavelength, the first optical fibre being disposed in a first plane perpendicular to the optical axis of the objective and the second optical fibre being disposed in a second plane parallel to the first plane and offset relative to said first plane.

7. An optical telescope (100) comprising an optical objective (110), a photo-detection unit (120) disposed at the focal point of said optical objective and at least one light source (121) disposed in the vicinity of said photo-detection unit, the optical pupil of the optical objective having a first diameter, the telescope also comprising a movable cover (140) having two positions, a first open or operating position for exposing the entire pupil of the objective and a second closed or test position for protecting the entire pupil of the objective, the movable cover (140) comprising a single flat mirror (130) having a second diameter that is less than the first diameter and means for disposing this flat mirror so that the image of the light source provided by the optical objective and reflected by said flat mirror focuses on the photo-detection unit, said received image being a partial image of the optical objective, the telescope comprising means for analysing said received image,
**characterised in that** the analysis means are configured to carry out a partial characterisation by determining the optical quality of part of the objective on the basis of said received image, the analysis means also being configured to determine the drift of the optical quality of the telescope on the basis of said partial characterisation.

8. The optical telescope as claimed in claim 7, **characterised in that** the ratio of the second diameter to the first diameter is between 30% and 80%.

9. The optical telescope as claimed in claim 8, **characterised in that** the ratio of the second diameter to the first diameter is approximately 60%.

10. The optical telescope as claimed in claim 7, **characterised in that** the light source comprises at least one lighting source and one optical fibre, one of the ends of which is disposed in the vicinity of the photo-sensitive surface of the photo-detection unit.

11. The optical telescope as claimed in claim 10, **characterised in that** the light source comprises at least two lighting optical fibres, with the optical objective working at a predetermined wavelength, the first optical fibre being disposed in a first plane perpendicular to the optical axis of the objective and the second optical fibre being disposed in a second plane parallel to the first plane and offset relative to said first plane.

12. The optical telescope as claimed in claim 7, **characterised in that** the analysis means comprise at least one wavefront analyser of the received images for estimating the "WFE" of the instrument.
